# EUROPÄISCHE PATENTSCHRIFT

(11) **EP 2 444 590 B1**
(45) Veröffentlichungstag und Bekanntmachung des Hinweises auf die Patenterteilung: **06.08.2014**
(21) Anmeldenummer: 10188083.9
(22) Anmeldetag: 19.10.2010
(51) Int. Cl.: F01D 5/00, F01D 5/28, C23C 4/00, C23C 4/12

(54) **Verfahren zur Beschichtung von Kühlbohrungen**
Method for coating cooling holes
Procédé de revêtement de trous de refroidissement

(43) Veröffentlichungstag der Anmeldung: 25.04.2012
(73) Patentinhaber: Siemens Aktiengesellschaft, 80333 München (DE)
(72) Erfinder: Kyeck, Sascha Martin, Dr., 14197 Berlin (DE); Ladru, Francis-Jurjen, Dr., 13587 Berlin (DE); Siebert, Bernhard, Dr., 14059 Berlin (DE)

(56) Entgegenhaltungen:
- EP-A1- 1 233 081
- EP-A1- 1 275 749
- EP-A1- 1 632 720
- WO-A1-2008/049460
- WO-A1-2009/144109
- US-A- 4 338 360
- US-A- 5 941 686

## Beschreibung

Die Erfindung betrifft gekühlte und beschichtete Turbinenschaufeln, bei denen die Durchflussmenge des Kühlmittels eingestellt wird.

In verschiedenen Fällen kommt es vor, dass gekühlte Turbinenschaufeln (Leit- und/oder Laufschaufeln) mit Kühlluftlöchern falsche, insbesondere zu hohe Durchflussmengen des Kühlluftstroms aufweisen. In diesem Fall wird der Wirkungsgrad der Gasturbine negativ beeinflusst. Die im Kompressor komprimierte Luft wird möglichst wenig zur Kühlung eingesetzt, sondern soll dem Verbrennungsprozess zugeführt werden. Unter Kühlluftöffnungen wird verstanden: Gegossene oder gebohrte Austrittskante, Stembohrungen (Längsbohrungen)- EDM- oder Laser Shapes (Diffusoren), Zylindrische EDM- oder Laser-Bohrungen.
Das Fehlerbild oder die zu optimierende Durchflussmenge wird oft vergleichsweise spät in der Prozesskette festgestellt. Die Bauteile als Ausschuss zu deklarieren ist daher sehr kostspielig.
Beispiele für zu hohe Durchflussmengen sind:
Fehler im Guss; beim Bohrprozess; Fehler beim Bohrprozess bei Upgrades; zusätzliche Keramikbeschichtung oder Erhöhung der Schichtdicke oder Leitfähigkeitsverringerung während des Refurbishments; beim Strippen oder Nacharbeit kann auch der Grundwerkstoff durch die Säure angegriffen werden, so dass die Kühlluftöffnungen sich vergrößern.

Die WO 2009/144109 A1 offenbart die Beschichtung einer Oberfläche ohne Löcher, bei dem Spritzwinkel von Ebene zu Ebene oder von benachbarten Beschichtungsbahnen verändert wird, um eine größere Rauheit zu erzeugen.

Die US 5,941,686 offenbart Filmkühllöcher, bei dem ein Teil der äußeren Beschichtung in das Kühlluftloch hineinragt.

Dieses Problem der zu hohen Durchflussmengen gilt es kostengünstig zu lösen.

Es ist daher Aufgabe der Erfindung o. g. Problem zu lösen. Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen. Es zeigen:
- Figur 1, 2: eine Schnittdarstellung von Kühlluftlöchern,
- Figur 3 - 5: Figuren, die die Erfindung darstellen,
- Figur 6: eine Turbinenschaufel und
- Figur 7: eine Liste von Superlegierungen.

Die Figuren und die Ausführungsbeispiele sind nur exemplarisch für die Erfindung.

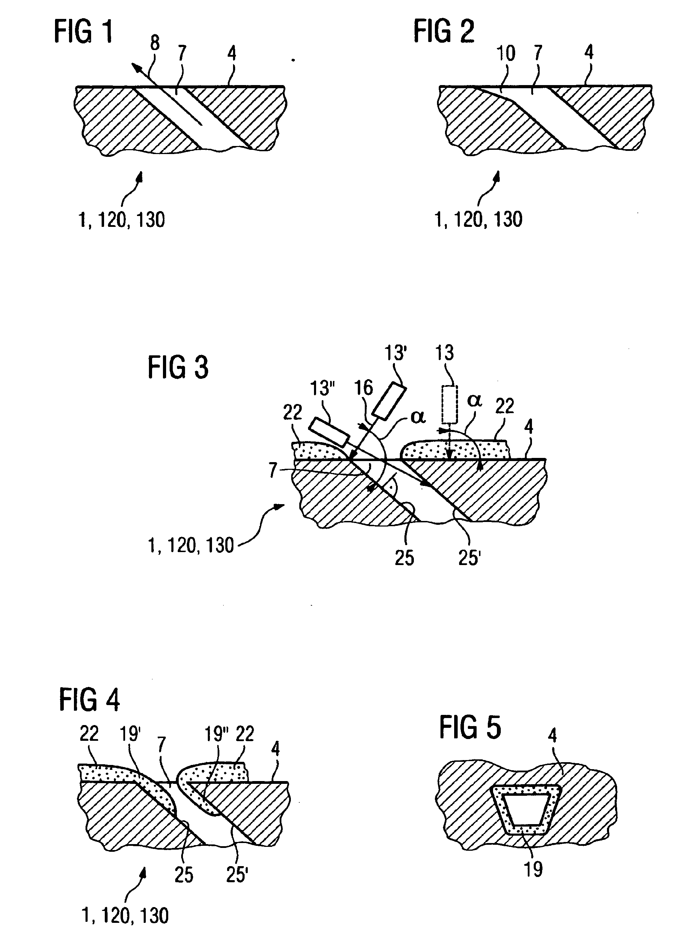

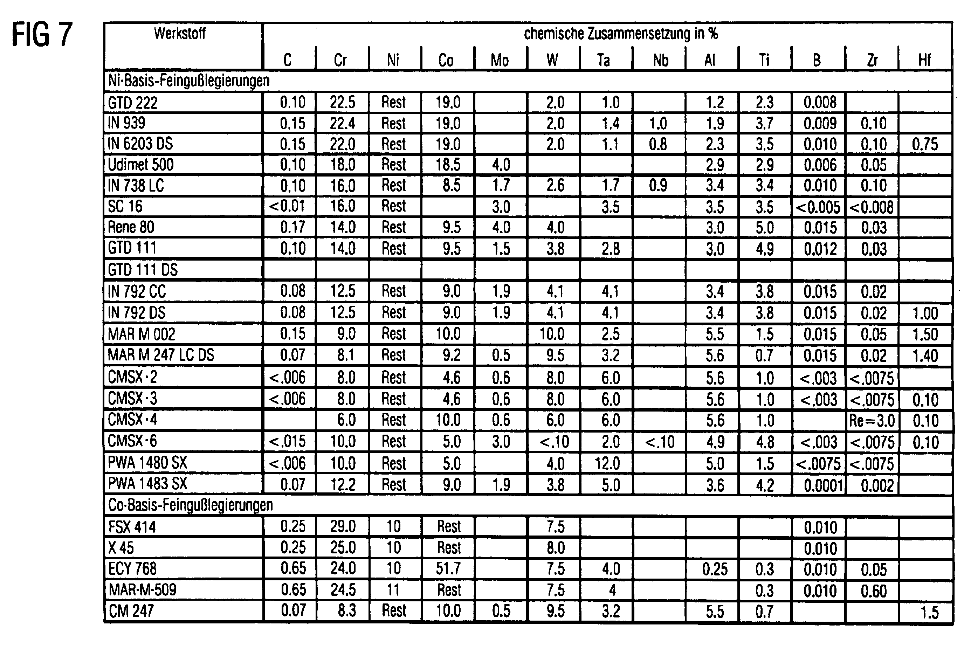

In Figur 1 ist ein Bauteil 1 mit einem Loch 7, hier beispielhaft ein Kühlluftloch 7 dargestellt.
Das Bauteil 1 ist nur beispielhaft und insbesondere eine Turbinenschaufel 120, 130 einer Turbine, insbesondere eine Gasturbine 100 und weist eine Superlegierung gemäß Figur 7 auf.

Durch das Kühlluftloch 7 kann aus der äußeren Oberfläche 4 ein Kühlmittel (Luft, Dampf) austreten.
Das Kühlluftloch 7 kann vorzugsweise einen konstanten Querschnitt in Ausströmrichtung 8 aufweisen oder sich ab einem gewissen Abstand unterhalb der Oberfläche 4 zu einem Diffusor vergrößern (Fig. 2).
Diese Vergrößerung kann kontinuierlich in Ausströmrichtung 8 erfolgen oder durch einen Diffusor 10 (Fig. 2) im Bereich der Oberfläche 4, der eine Verbreitung des Lochs ab einer gewissen Tiefe unterhalb der Oberfläche 4 darstellt, gebildet sein.
Durch eine Verengung des Querschnitts im Loch 7 kann insbesondere der Kühlmitteldurchsatz eingestellt werden, wenn sich an den sonstigen Bedingungen, wie dem Druck des austretenden Kühlmediums, nichts ändert.
Auf solche Bauteile 120, 130 mit Kühlluftlöchern erfolgt eine äußere Beschichtung 22 aus metallischer und/oder keramischer Beschichtung.

Werden die Kühlluftlöcher nicht geschützt, so findet ein "Coat Down" statt, der jedoch nicht kontrolliert erfolgen würde und in der Regel vermieden wird.

Hier wird der Coat down zugelassen und erfolgt in kontrollierter Weise.

Die Beschichtung der äußeren Oberfläche 4 in der Stellung 13 der Beschichtungsdüse erfolgt unter einen Winkel α zwischen 80° und 100° auf, vorzugsweise 90°.

Gestrichelt angedeutet ist in Figur 3 die Stellung der Düse 13 zur Beschichtung der Oberfläche 4.

Die Bezugszeichen 13, 13', 13" stellen in allen Figuren nur verschiedene Winkelstellungen einer selben Beschichtungsdüse dar.

Daher wird gemäß Figur 3 eine Verengung durch eine Beschichtung 19', 19" im Loch 7 kontrolliert eingestellt, indem eine Beschichtungsdüse 13' möglichst unter einem steilen Spritzwinkel α von 50° - 100°, vorzugsweise 80° bis 100°, ganz vorzugsweise 90° zur beschichteten Oberfläche 25 im Kühlluftloch 7 eingestellt wird.

Der Spritzwinkel α für die innere Beschichtung 19', 19" beträgt zwischen 50° und 100°, insbesondere 80° und 100°, ganz insbesondere 90°. Wenn die Spritzwinkel für die Beschichtung der äußeren Oberfläche und die Beschichtung im Loch auf die äußere Oberfläche bezogen werden, dann erfolgt die Beschichtung mit der Beschichtungsdüse innerhalb des Lochs unter einem anderen Spritzwinkel als die Beschichtung der äußeren Oberfläche.

Insbesondere in der Stellung 13" der Beschichtungsdüse zur Beschichtung des Lochs 7 im Bereich der Hinterschneidung, d.h. in einem stumpfen Winkel zur äußeren Oberfläche 4 kann der Spritzwinkel von 90° nicht eingehalten werden. So wird aber zumindest stellenweise, insbesondere für zumindest 20% der inneren Oberfläche 25, 25' der bevorzugte Spritzwinkel α eingestellt.

Der Spritzwinkel α zwischen Düse 13" und innere Oberfläche 25' soll aber möglichst 90° sein.

So wird in dem Loch 7 herum eine Verengung 19', 19" erzeugt, wie es in der Figur 4 dargestellt ist, die sich aber nicht vollständig in die Tiefe des Lochs 7 erstreckt und dieses auch nicht verschließt.

Die Beschichtung 19', 19" verläuft insbesondere vollständig um die gesamte Umfangslinie des Kühlluftlochs 7, wie es in Figur 5, einer Aufsicht auf einen Diffusor 10, dargestellt ist.

Für die Beschichtung 19', 19" in dem Loch 7 wird vorzugsweise eine feinere Pulverkörnung verwendet als für die Beschichtung 22 auf der äußeren Oberfläche 4, d.h. der Durchschnittswert der Körner ist vorzugsweise mindestens 10%, ganz insbesondere 20% kleiner.

So oder vorzugsweise durch veränderte Herstellungsparameter (Leistung der Düse) schmelzen die Pulverteilchen für die Beschichtung 19', 19" mehr auf, d.h. vorzugsweise um mindestens 20%, ganz insbesondere um 30%, insbesondere durch eine höhere Temperatur der kleineren Pulverteilchen. So wird für die Beschichtung 22 die Schmelztemperatur der gröberen Pulverteilchen nicht überschritten oder nur die äußere Schale der Pulverteilchen angeschmolzen (höchstens 50%, insbesondere höchstens 35%) oder thixotropisch zwischen solidus und liquidus homogen geschmolzen. Für die Beschichtung 19', 19" im Loch 7 wird vorzugsweise metallisches Material, insbesondere eine MCrAl-Legierung verwendet.

Die äußere Beschichtung weist eine metallische, vorzugsweise MCrAl und eine keramische Beschichtung, vorzugsweise Basis ZrO₂, auf.

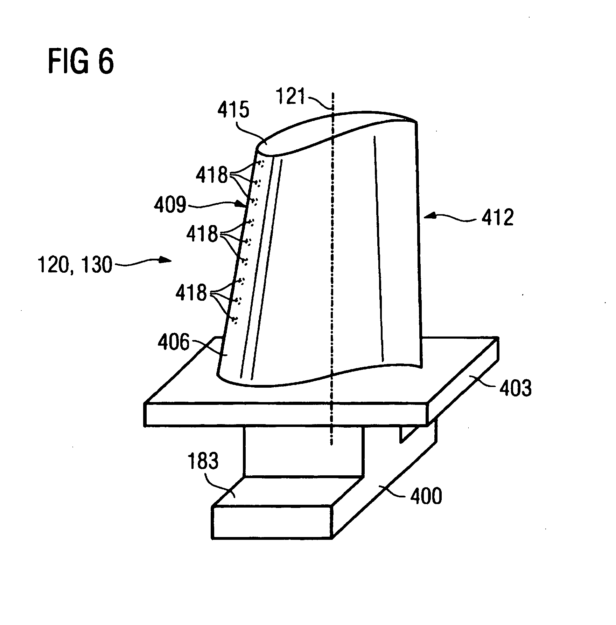

Die Figur 6 zeigt in perspektivischer Ansicht eine Laufschaufel 120 oder Leitschaufel 130 einer Strömungsmaschine, die sich entlang einer Längsachse 121 erstreckt.

Mögliche Beschichtungsverfahren sind APS, HVOPF, VPS, SPS (Shrouded Plasma Spray, Kaltgas, ...). Vorzugsweise wird eine metallische Metalllegierungsschicht (MCrAlY) verspritzt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Beschichtung des Rands innerhalb von
Kühlluftlöchern (7) in beschichteten Bauteilen (1, 120, 130),
bei dem ein Kühlmittel aus dem Kühlluftloch (7) aus der äußeren Oberfläche (4) des Bauteils (1, 120, 130) austreten kann,
wobei eine äußere Beschichtung (22) auf der äußeren
Oberfläche (4) des Bauteils (1) erzeugt wird und
wobei eine innere Beschichtung (19', 19") auf der inneren Oberfläche (25, 25') innerhalb des Kühlluftlochs (7)
erzeugt wird,
**dadurch gekennzeichnet, dass**
die innere Beschichtung (19', 19") innerhalb des Kühlluftlochs (7) mit einer Beschichtungsdüse (13, 13', 13") unter einem anderen Spritzwinkel erfolgt als die äußere Beschichtung (22) der Oberfläche (4) des Bauteils um das Kühlluftloch (7),
wenn die Spritzwinkel (α) für die äußere (22) und innere (19', 19") Beschichtung auf die äußere Oberfläche (4) bezogen werden.

2. Verfahren nach Anspruch 1,
bei dem ein Spritzwinkel (α) für die innere Beschichtung (19', 19") zumindest stellenweise,
der gleiche ist wie der Spritzwinkel (α) für die äußere Beschichtung (22) auf der äußeren Oberfläche (4) des Bauteils (1, 120, 130),
wenn die Spritzwinkel (α) auf die zu beschichtenden Oberflächen (4, 25, 25') bezogen wird.

3. Verfahren nach Anspruch 1 oder 2,
bei dem ein Pulver für die Beschichtungen (19', 19", 22) verwendet wird und
bei dem für die Erzeugung der inneren Beschichtung (19', 19") auf der inneren Oberfläche (25, 25') des Kühlluftlochs (7) eine feinere Pulverkörnung als im Vergleich für die äußere Beschichtung (22) auf der Oberfläche (4) des Bauteils (1, 120, 130) verwendet wird.

4. Verfahren nach Anspruch 1, 2 oder 3,
bei dem ein Pulver für die Beschichtungen (19', 19", 22) verwendet wird und
bei dem die Pulverteilchen durch Beschichtungsparameter und/oder Pulvereigenschaften für die innere Beschichtung (19', 19") einen höheren Pulveraufschmelzungsgrad aufweisen als im Vergleich zum Pulver für die äußere Beschichtung (22).

5. Verfahren nach Anspruch 1, 2, 3, 4 oder 4,
bei dem ein thermisches Spritzverfahren verwendet wird.

6. Verfahren nach Anspruch 5,
bei dem ein HVOF-Beschichtungsverfahren für die Beschichtung (19', 19", 22) verwendet wird.

7. Verfahren nach Anspruch 1, 2, 3, 4, 5 oder 6,
das bei symmetrischen Längsbohrungen, Kühlluftlöchern (7) mit Diffusor (10) und/oder im Bereich von Austrittskanten (412) mit Löchern angewendet wird.

8. Verfahren nach Anspruch 1, 2, 3, 4, 5, 6 oder 7,
bei dem ein Pulver für die Beschichtungen (19', 19" , 22) verwendet wird und
bei dem die Pulverteilchen für die innere Beschichtung (19', 19") nahezu vollständig aufschmelzen.

9. Verfahren nach Anspruch 1, 2, 3, 4, 5, 6 oder 8,
bei dem ein Pulver für die Beschichtungen (19', 19", 22) verwendet wird und
bei dem die Pulverteilchen für die äußere Beschichtung (22) nur teilweise aufschmelzen.

10. Verfahren nach einem oder mehreren der vorhergehenden Ansprüche,
bei dem der Spritzwinkel (α) für eine Verengung im Kühlluftloch (7) zwischen 50° und 100° beträgt.

11. Verfahren nach einem der vorhergehenden Ansprüche,
bei dem für die innere Beschichtung (19', 19") des Kühlluftlochs (7) eine metallische Beschichtung erzeugt wird.

12. Verfahren nach einem der vorhergehenden Ansprüche,
bei dem der Spritzwinkel (α) für die äußere Beschichtung (22) auf die äußere Oberfläche (4) des Bauteils (1, 120, 130) zwischen 80° und 100° beträgt.

13. Verfahren nach einem der vorhergehenden Ansprüche,
bei dem für die äußere Beschichtung (22) eine metallische und keramische Schicht verwendet wird.

14. Verfahren nach Anspruch 11 oder 13,
bei dem eine MCrAlX-Legierung für die metallische Beschichtung verwendet wird.

15. Verfahren nach einem oder mehreren der vorhergehenden Ansprüche,
bei dem für die äußere (20, 22) und innere Beschichtung (19', 19") das gleiche Material verwendet wird.

16. Verfahren nach einem oder mehreren der vorhergehenden Ansprüche,
bei dem das Kühlluftloch (7) nicht verschlossen wird und bei dem das Kühlluftloch (7) nicht vollständig über seine Länge in die Tiefe hinein beschichtet wird.

## Claims

1. Process for coating the edge within cooling-air holes (7) in coated components (1, 120, 130),
in which process a coolant can escape from the cooling-air hole (7) from the outer surface (4) of the component (1, 120, 130),
wherein an outer coating (22) is produced on the outer surface (4) of the component (1), and
wherein an inner coating (19', 19") is produced on the inner surface (25, 25') within the cooling-air hole (7), **characterized in that** the inner coating (19', 19") within the cooling-air hole (7) takes place using a coating nozzle (13, 13', 13") at a different spray angle to the outer coating (22) of the surface (4) of the component around the cooling-air hole (7),
if the spray angles (α) for the outer coating (22) and inner coating (19', 19") relate to the outer surface (4).

2. Process according to Claim 1,
in which a spray angle (α) for the inner coating (19', 19") is the same, at least in some places,
as the spray angle (α) for the outer coating (22) on the outer surface (4) of the component (1, 120, 130),
if the spray angles (α) relate to the surfaces (4, 25, 25') to be coated.

3. Process according to Claim 1 or 2,
in which a powder is used for the coatings (19', 19'', 22), and
in which finer powder grains are used for producing the inner coating (19', 19") on the inner surface (25, 25') of the cooling-air hole (7) than for the outer coating (22) on the surface (4) of the component (1, 120, 130).

4. Process according to Claim 1, 2 or 3,
in which a powder is used for the coatings (19', 19'', 22), and
in which the powder particles, as a result of coating parameters and/or powder properties, have a higher degree of powder fusion for the inner coating (19', 19'') compared to the powder for the outer coating (22).

5. Process according to Claim 1, 2, 3 or 4,
in which a thermal spraying process is used.

6. Process according to Claim 5,
in which an HVOF coating process is used for the coating (19', 19", 22).

7. Process according to Claim 1, 2, 3, 4, 5 or 6,
which is used in the case of symmetrical longitudinal bores, cooling-air holes (7) with a diffuser (10) and/or in the region of outlet edges (412) with holes.

8. Process according to Claim 1, 2, 3, 4, 5, 6 or 7,
in which a powder is used for the coatings (19', 19'', 22), and
in which the powder particles for the inner coating (19', 19") undergo virtually complete fusion.

9. Process according to Claim 1, 2, 3, 4, 5, 6 or 8,
in which a powder is used for the coatings (19', 19'', 22), and
in which the powder particles for the outer coating (22) undergo only partial fusion.

10. Process according to one or more of the preceding claims, in which the spray angle (α) for a constriction in the cooling-air hole (7) is between 50° and 100°.

11. Process according to one of the preceding claims,
in which a metallic coating is produced for the inner coating (19', 19") of the cooling-air hole (7).

12. Process according to one of the preceding claims,
in which the spray angle (α) for the outer coating (22) on the outer surface (4) of the component (1, 120, 130) is between 80° and 100°.

13. Process according to one of the preceding claims,
in which a metallic and ceramic layer is used for the outer coating (22).

14. Process according to Claim 11 or 13,
in which an MCrAlX alloy is used for the metallic coating.

15. Process according to one or more of the preceding claims,
in which the same material is used for the outer coating (20, 22) and inner coating (19', 19'').

16. Process according to one or more of the preceding claims, in which the cooling-air hole (7) is not closed, and
in which the cooling-air hole (7) is not completely coated over its length into the depth.

## Revendications

1. Procédé de revêtement du bord à l'intérieur de trous ( 7 ) pour de l'air de refroidissement dans des pièces ( 1, 120, 130 ) revêtues,
dans lequel un fluide de refroidissement peut, par le trou ( 7 ) pour de l'air de refroidissement, sortir de la surface ( 4 ) extérieure de la pièce ( 1, 120, 130 ),
dans lequel on produit un revêtement ( 22 ) extérieur sur la surface ( 4 ) extérieure de la pièce ( 1 ) et
dans lequel on produit, à l'intérieur du trou ( 7 ) pour de l'air de refroidissement, un revêtement ( 19', 19" ) intérieur sur la surface ( 25, 25' ) intérieure ; **caractérisé en ce que**
le revêtement ( 19', 19'' ) intérieur, à l'intérieur du trou ( 7 ) pour de l'air de refroidissement, s'effectue à l'aide d'une buse ( 13, 13', 13'' ) de revêtement sous un angle de pulvérisation autre que pour le revêtement ( 22 ) extérieur de la surface ( 4 ) de la pièce autour du trou ( 7 ) pour de l'air de refroidissement,
les angles ( α ) de pulvérisation pour les revêtements extérieur ( 22 ) et intérieur ( 19', 19'' ) étant rapportés à la surface ( 4 ) extérieure.

2. Procédé suivant la revendication 1,
dans lequel un angle ( α ) de pulvérisation pour le revêtement ( 19', 19'' ) intérieur est, au moins par endroit, égal à l'angle ( α ) de pulvérisation pour le revêtement
( 22 ) extérieur sur la surface ( 4 ) extérieure de la pièce ( 1, 120, 130 ) ,
l'angle ( α ) de pulvérisation étant rapporté aux surfaces ( 4, 25, 25' ) à revêtir.

3. Procédé suivant la revendication 1 ou 2,
dans lequel on utilise une poudre pour les revêtements ( 19', 19'', 22 ) et
dans lequel, pour la production du revêtement ( 19', 19'' ) intérieur sur la surface ( 25, 25' ) intérieure du trou ( 7 ) pour de l'air de refroidissement, on utilise une granulométrie de poudre plus fine que pour le revêtement ( 22 ) extérieur sur la surface ( 4 ) de la pièce ( 1, 120, 130 ).

4. Procédé suivant la revendication 1, 2 ou 3,
dans lequel on utilise une poudre pour les revêtements ( 19', 19", 22 ) et
dans lequel les particules de poudre ont, par des paramètres de revêtement et/ou des propriétés de poudre pour le revêtement ( 19', 19'' ) intérieur, un degré de fusion de poudre plus haut que celui de la poudre pour le revêtement ( 22 ) extérieur.

5. Procédé suivant la revendication 1, 2 ,3 ou 4,
dans lequel on utilise un procédé de pulvérisation thermique.

6. Procédé suivant la revendication 5,
dans lequel on utilise un procédé de revêtement HVOF pour les revêtements ( 19', 19'', 22 ).

7. Procédé suivant la revendication 1, 2, 3, 4, 5 ou 6,
qui est appliqué pour des trous oblongs symétriques, pour des trous ( 7 ) pour de l'air de refroidissement à diffuseur
( 10 ) et/ou dans la région de bords ( 412 ) de sortie ayant des trous.

8. Procédé suivant la revendication 1, 2, 3, 4, 5, 6 ou 7, dans lequel on utilise une poudre pour les revêtements ( 19', 19'', 22 ) et
dans lequel on fait fondre presque complètement les particules de poudre pour le revêtement ( 19', 19'' ) intérieur.

9. Procédé suivant la revendication 1, 2, 3, 4, 5, 6 ou 8, dans lequel on utilise une poudre pour les revêtements ( 19', 19", 22 ) et
dans lequel on ne fait fondre que partiellement les particules de poudre pour le revêtement ( 22 ) extérieur.

10. Procédé suivant l'une ou plusieurs des revendications précédentes,
dans lequel l'angle ( α ) de pulvérisation est, pour un resserrement dans le trou ( 7 ) pour de l'air de refroidissement, compris entre 50° et 100°.

11. Procédé suivant l'une des revendications précédentes,
dans lequel on produit un revêtement métallique pour le revêtement ( 19', 19'' ) intérieur du trou ( 7 ) pour de l'air de refroidissement.

12. Procédé suivant l'une des revendications précédentes,
dans lequel l'angle ( α ) de pulvérisation, pour le revêtement ( 22 ) extérieur sur la surface ( 4 ) extérieure de la pièce ( 1, 120, 130 ), est compris entre 80° et 100°.

13. Procédé suivant l'une des revendications précédentes,
dans lequel on utilise une couche métallique et céramique pour le revêtement ( 22 ) extérieur.

14. Procédé suivant la revendication 11 ou 13,
dans lequel on utilise un alliage MCrAlX pour le revêtement métallique.

15. Procédé suivant l'une ou plusieurs des revendications précédentes,
dans lequel on utilise la même matière pour le revêtement ( 20, 22 ) extérieur et le revêtement ( 19', 19'' ) intérieur.

16. Procédé suivant l'une ou plusieurs des revendications précédentes,
dans lequel le trou ( 7 ) pour de l'air de refroidissement n'est pas fermé et
dans lequel le trou ( 7 ) pour de l'air de refroidissement n'est pas revêtu en allant dans la profondeur complètement sur sa longueur.
